# EUROPEAN PATENT SPECIFICATION

(11) **EP 0 454 644 B1**
(45) Date of publication and mention of the grant of the patent: **22.06.1994**
(21) Application number: 91850101.6
(22) Date of filing: 23.04.1991
(51) Int. Cl.: B67D 5/32, F16K 17/04

(54) **Arrangement in liquide pumps**
Vorrichtung in Flüssigkeitspumpen
Dispositif pour pompes de liquide

(30) Priority: 23.04.1990 SE 9001426
(43) Date of publication of application: 30.10.1991
(73) Proprietor: DRESSER WAYNE AB, S-200 61 Malmö (SE)
(72) Inventor: Larsson, Bengt, S-270 10 Skivarp (SE); Danielsson, Ake, S-230 10 Skanör (SE)
(74) Representative: Rostovanyi, Peter

(56) References cited:
- EP-A- 0 153 516
- AU-D- 7 686 474
- DE-A- 3 000 682
- US-A- 3 152 606

## Description

The present invention relates to an arrangement in liquid pumps, especially in petrol pumps.

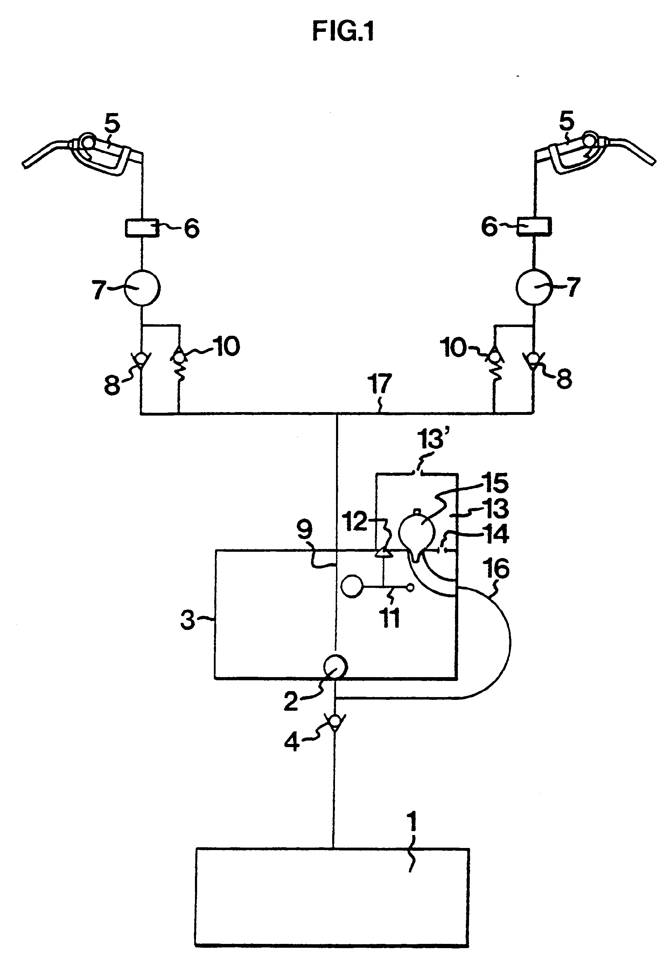

A conventional petrol pump arrangement relies on the circuit diagram appearing from Fig. 1. During an ordinary petrol dispensing operation, petrol is drawn from a tank 1 by a pump 2 into a pump housing 3 through a non-return valve 4, and the pump 2 delivers the petrol up to and through a delivery nozzle 5, via a flow control valve 6, a meter 7, a non-return valve 8, and a riser pipe 9 in the pump housing. An overflow valve 10 connected in parallel with the non-return valve is adapted, at a predetermined overpressure in the hose section to the delivery nozzle 5, to allow petrol to return to the pump housing 3. Overpressure may arise, e.g. upon a temperature rise or if said hose section is flattened e.g. by a vehicle running over it.

The pump housing 3 holds a float 11 adapted, during regular suction of petrol from the tank 1, to maintain an air outlet 12 of a float housing 13 closed and, in case the pump 2 is also sucking air, to open the air outlet 12 when the petrol level in the pump housing 3, as a result of the air pumping, has sunk to a predetermined level. Air is then emitted into the atmosphere via the float housing having a vent hole 13′. In this manner, air is prevented from being pressed out into the delivery line of the pump. A minor outlet 14 from the pump housing 3 is constantly open to the float housing 13. Any petrol that may have entered the float housing will lift the float 15 therein when the quantity of petrol has reached a predetermined level, and the float 15 will then open a petrol outlet connected to the suction side of the pump by a line 16.

The non-return valve 8 necessarily has a capacity reducing effect. To offset this drawback, the valve is often set at an opening pressure which is lower than the working pressure of the pump when it is pumping air. This entails the risk of the non-return valve being opened by the action of air, if the pump is pumping air. The float 11 cannot efficiently prevent this, for under unfavourable conditions too much air will have been sucked into the pump housing 3 before the float 11 reacts by opening the air outlet 12. The non-return valve 8, disposed just before (upstream of) the meter 7, may also because of its flow throttling effect give rise to cavitation in the meter with consequent impaired measuring accuracy.

The object of the invention is to overcome these problems. This object is achieved by means of a valve system as recited in the claims.

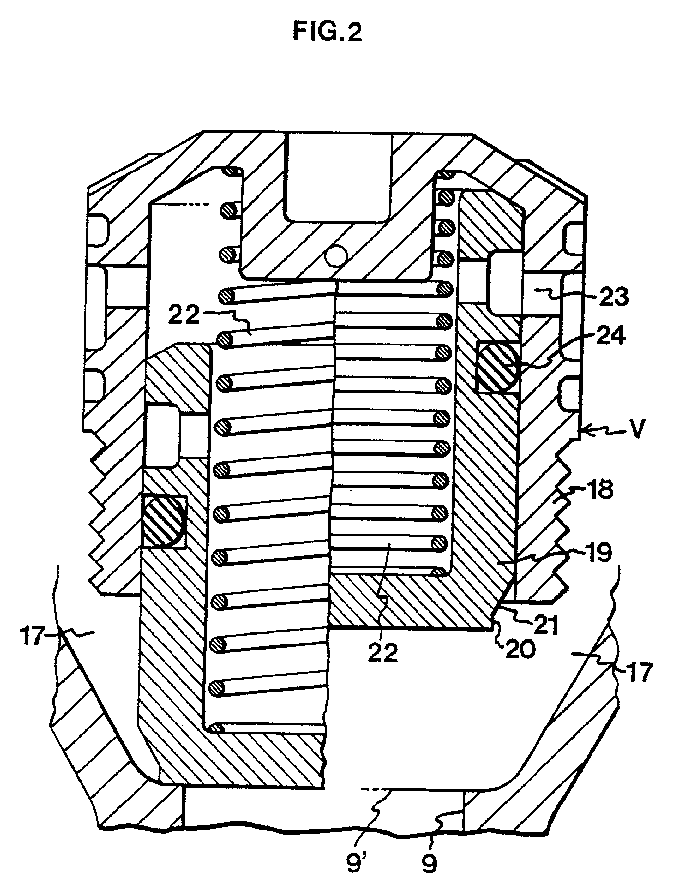

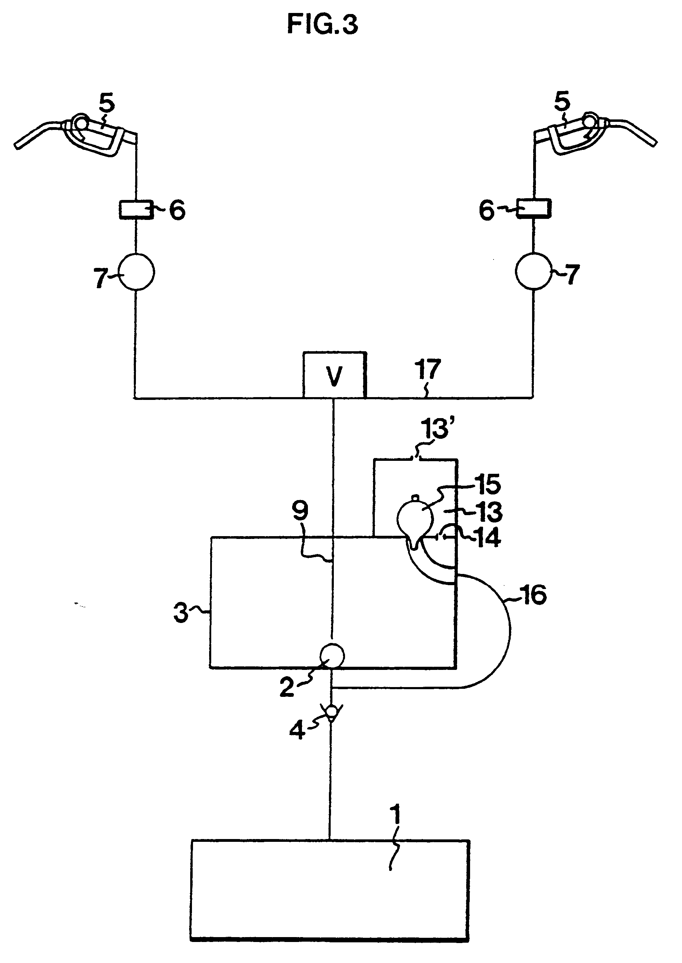

One example of the invention will now be described in more detail with reference to the accompanying drawings, in which Fig. 1, as stated, shows a known pump arrangement, and Fig. 2 shows an embodiment of a valve system V which is characteristic of the invention, and Fig. 3 shows the valve system of Fig. 2 advantageously replacing the non-return and pressure relief valves of the known pump arrangement and its pump housing float. This Figure is drawn to scale.

Reference is now made to Figs. 2 and 3. The junction area between the riser pipe 9 and the branch lines out to the delivery nozzles 5 is so provided that in the branch line passage 17, opposite the mouth 9′ of the riser pipe 9 in the branch line passage, terminates a cylinder 18 which is aligned with the mouth of the riser pipe 9 and houses a piston 19 whose lower end forms a nose 20 having the same cross-sectional shape and at least as large a cross-sectional area as the mouth 9′. The nose 20 merges into the piston body through a shoulder 21.

Suitably, said cross-sectional shapes are circular.

A compression spring 22 provided in the cylinder 18 preloads the piston so as to occupy a position in which the end surface of the piston nose 20 engages the mouth 9′ of the riser pipe.

The upper end of the cylinder 18 communicates with the ambient atmosphere through vent holes 23, such that atmospheric pressure prevails at the rear side of the piston.

By suitably dimensioning the compression spring 22, the mouth of the riser pipe, the end surface of the piston nose 20 and the area of the shoulder 21 (outer diameter of piston), the following function is obtained in the pump arrangement according to the invention.

If the pump 2 is pumping petrol and this has reached a predetermined pressure value, e.g. 1 bar, the petrol will lift the piston 19 off its seat 9′ against the action of the spring 22, such that petrol in the tank 1 can communicate with the delivery nozzle 5. A pressure exerted on a closing piston which is lower than the predetermined pressure, e.g. a pressure obtained when the pump is pumping air, will not be able to lift the piston. If, during a pumping operation, the pump starts pumping air, i.e. the pressure on a lifted piston drops, the piston will descend and, if the pressure drop reaches a predetermined value, e.g. 0.5 bar, close the mouth 9′.

Assume that the delivery nozzle 5 is closed and an overpressure is building up in the passage(-s) 17. When the overpressure has reached a predetermined value, it will lift, by acting on the shoulder 21, the piston off its seat 9′, thus allowing petrol to flow back into the pump housing 3.

The above-mentioned appropriate dimensioning, which a person skilled in the art can readily perform, includes choosing such a large outer diameter of the piston that the predetermined pressure for opening the valve 9, 19 will move the piston into a completely or an almost completely inserted position in the cylinder 18 (to the right of the centre line in Fig. 2), so as to have low pressure losses during pumping. The piston will leave this position at a pressure determined by said outer diameter in order, when the predetermined low pressure prevails, to close the mouth 9′ (to the left of the centre line in Fig. 2).

An O-ring 24 can be provided in the outer face of the piston for sealing the cylinder 18. Such a seal may be dispensed with if the vent holes 23 are connected to the float housing 13 which takes care of any petrol that may have happened to pass by the piston in the cylinder.

The inventive principle is of course applicable also to a pump arrangement having only one delivery nozzle (corresponding to the illustrated embodiment with operation of only one delivery nozzle) or to a pump arrangement having more than two delivery nozzles with associated components.

## Claims

1. Arrangement in liquid pumps, comprising a valve system with the functions of a non-return valve (8), a pressure relief valve (10) and a ventilating valve (11), the valve system being connected in the delivery line between a liquid pump (2) and a petrol delivery nozzle (5), **characterised** in that the valve system (V) comprises a piston and cylinder assembly (18, 19) whose cylinder (18) has an open end communicating with the delivery line and whose piston (19), adapted to move back and forth through the open cylinder end, has a tapered end portion (20, 21) facing the upstream side of the delivery line passage, and is biased so as to occupy a position in which said tapered piston end portion, with a cross-sectional area thereof which is smaller than its largest cross-sectional area, closes said upstream side by engaging a seat (9′), the taper of said piston end portion being such that in said position, said largest cross-sectional area will be spaced from said seat, as seen in the direction of movement of the piston.

2. Arrangement as claimed in claim 1, **characterised** in that the tapered piston end portion (20, 21) is so dimensioned that a predetermined working pressure exerted on the liquid moves the piston completely or almost completely into the cylinder, against the action of said bias, so as to provide communication with the petrol delivery nozzle.

3. Arrangement as claimed in claim 1 or 2, **characterised** in that in said position, said tapered piston end portion engages said seat with an annular portion around said smaller cross-sectional area.

4. Arrangement as claimed in claim 1, 2 or 3, **characterised** in that an opening (23) connects the cylinder space above the piston to an air and liquid separator (13).

## Patentansprüche

1. Vorrichtung in Flüssigkeitspumpen, umfassend ein Ventilsystem mit den Funktionen eines Rückschlagventils (8), eines Druckbegrenzungsventils (10) und eines Lüftungsventils (11), wobei das Ventilsystem in der Förderleitung zwischen einer Flüssigkeitspumpe (2) und einer Benzinausflussdüse (5) eingeschaltet ist, dadurch **gekennzeichnet,** dass das Ventilsystem (V) eine Kolben-Zylinder-Einrichtung (18, 19) umfasst, deren Zylinder (18) ein mit der Förderleitung in Verbindung stehendes offenes Ende aufweist und deren Kolben (19), der zur Hin- und Herbewegung durch das offene Zylinderende vorgesehen ist, einen konisch zulaufenden, der stromaufwärts liegenden Seite des Förderleitungsdurchgangs zugewandten Endabschnitt (20, 21) aufweist und vorbelastet ist, um eine Position einzunehmen, in welcher der konisch zulaufende Kolbenendabschnitt mit einer Querschnittsfläche, die kleiner ist als seine grösste Querschnittsfläche, die stromaufwärts liegende Seite durch Eingriff mit einem Sitz (9′) verschliesst, wobei die Verjüngung des Kolbenendabschnitts eine solche ist, dass sich in der genannten Kolbenposition die genannte grösste Querschnittsfläche im Abstand vom Sitz befindet, in der Bewegungsrichtung des Kolbens gesehen.

2. Vorrichtung nach Anspruch 1, dadurch **gekennzeichnet,** dass der konisch zulaufende Kolbenendabschnitt (20, 21) so bemessen ist, dass ein auf die Flüssigkeit ausgeübter, vorbestimmter Arbeitsdruck den Kolben vollständig oder fast vollständig in den Zylinder hineintreibt, und zwar entgegen der Wirkung der Vorbelastung, um mit der Benzinausflussdüse eine Verbindung herzustellen.

3. Vorrichtung nach Anspruch 1 oder 2, dadurch **gekennzeichnet,** dass in der genannten Kolbenposition der konisch zulaufende Kolbenendabschnitt durch einen ringförmigen Abschnitt um die genannte kleinere Querschnittsfläche herum mit dem Sitz eingreift.

4. Vorrichtung nach Anspruch 1, 2 oder 3, dadurch **gekennzeichnet,** dass der Zylinderraum oberhalb des Kolbens durch eine Öffnung (23) mit einem Luft- und Flüssigkeitsabscheider (13) verbunden ist.

## Revendications

1. Dispositif pour pompes de liquide, comportant un système de soupapes aux fonctions d'une soupape de non-retour (8), d'une soupape de sûreté (10) et d'une soupape d'évacuation (11), le système de soupapes étant connecté dans la ligne de refoulement entre une pompe de liquide (2) et une buse de décharge d'essence (5), **caractérisé** en ce que le système de soupapes (V) comprend un vérin (18, 19) dont le cylindre (18) a une extrémité ouverte en communication avec la ligne de refoulement et dont le piston (19), prévu pour exécuter un mouvement de va-et-vient à travers l'extrémité ouverte du cylindre, possède une partie d'extrémité effilée (20, 21) faisant face au côté amont du passage de la ligne de refoulement, et est sollicité de façon à venir dans une position dans laquelle ladite partie d'extrémité effilée du piston, par une superficie de la section transversale qui est plus petite que la superficie la plus grande de la section transversale, ferme ledit côté amont en venant en butée contre un siège (9'), ladite partie d'extrémité du piston s'effilant de façon que, dans ladite position, la superficie la plus grande de la section transversale susdite sera espacée du siège dans le sens de mouvement du piston.

2. Dispositif suivant la revendication 1, **caractérisé** en ce que la partie d'extrémité effilée (20, 21) du piston est dimensionnée de façon qu'une pression de service prédéterminée exercée sur le liquide déplace le piston en entier ou presque en entier dans le cylindre contre l'action de ladite sollicitation, établissant ainsi la communication avec la buse de décharge d'essence.

3. Dispositif suivant la revendication 1 ou 2, **caractérisé** en ce que la partie d'extrémité effilée du piston bute, dans ladite position, contre ledit siège par une partie annulaire autour de ladite superficie plus petite de la section transversale.

4. Dispositif suivant la revendication 1, 2 ou 3, **caractérisé** en ce qu'une ouverture (23) relie l'espace du cylindre au-dessus du piston à un séparateur d'air et de liquide (13).
